# EUROPÄISCHE PATENTSCHRIFT

(11) **EP 0 945 946 B1**
(45) Veröffentlichungstag und Bekanntmachung des Hinweises auf die Patenterteilung: **16.05.2001**
(21) Anmeldenummer: 99250038.9
(22) Anmeldetag: 05.02.1999
(51) Int. Cl.: H02G 9/04

(54) **Einrichtung zum Aufständern von Kunststoff-Kabeltrögen im Nahbereich elektrifizierter Bahnstrecken**
Device for supporting plastics cable troughs in the vicinity of electrified railway tracks
Dispositif pour supporter des caniveaux de câbles en matière synthétique à proximité de lignes de chemin de fer électrifiées

(30) Priorität: 23.03.1998 DE 29805653 U
(43) Veröffentlichungstag der Anmeldung: 29.09.1999
(73) Patentinhaber: SIEMENS AKTIENGESELLSCHAFT, 80333 München (DE)
(72) Erfinder: Lochow, Rolf, 15827 Blankenfelde (DE); Sahm, Gerd-Detlef, 38162 Cremlingen (DE)

(56) Entgegenhaltungen:
- DE-A- 3 447 836
- DE-A- 19 643 850

## Beschreibung

Die Erfindung bezieht sich auf eine Einrichtung nach dem Oberbegriff des Anspruches 1. Eine solche Einrichtung ist aus der DE 34 47 836 C2 bekannt. In dieser DE C2 wird über Kabeltröge für die Verwendung im Nahbereich elektrifizierter Bahnstrecken berichtet, die aus jeweils einem oder mehreren miteinander elektrisch verbundenen metallischen Trogelementen bestehen. Benachbarte Kabeltröge sind durch Dehnungsfugen voneinander getrennt und gesondert geerdet. Die aneinander grenzenden Enden der Trogelemente benachbarter Kabeltröge sind über isolierende Zwischenstücke mechanisch miteinander verbunden.

Die Verwendung metallischer Trogelemente birgt gewisse Risiken in sich. Zum einen ist die Gefahr von Kabelschlüssen infolge mangelnder Isolation der in den Trögen verlegten Einzelkabel größer als bei Kunststoff-Kabeltrögen; zum anderen können gerade metallische Kabeltröge bei fehlerhafter Ausführung, unsachgemäßer Handhabung bei Montagearbeiten und insbesondere auch bei mechanischen Beschädigungen ihrerseits zum Beschädigen der in den Kabeltrögen geführten elektrischen Kabel und damit zu Isolationsfehlern führen.

Kunststoff-Kabeltröge, die diese Nachteile nicht aufweisen, sind z. B. aus der DE 196 43 850 A1 bekannt. Aus dieser DE A1 ist es auch bekannt, die Kunststoff-Kabeltröge aufzuständern. Hierzu dient dort ein Doppel-T-Träger, auf den die Kabeltröge aufzusetzen und an dem sie in vorgegebener Weise zu befestigen sind; der Doppel-T-Täger ist über Auflieger auf Pfosten aufgeständert. Die Verwendung von Doppel-T-Trägern zum Aufständern von Kabeltrögen mag zu einer zuverlässigen Anordnung aufgeständerter Kabeltröge führen; der Aufwand hierfür ist jedoch erheblich, insbesondere, wenn die Schenkelbreite dieser Doppel-T-Träger an die Breite der Kabeltröge anzupassen ist.

Aufgabe der vorliegenden Erfindung ist es, eine Einrichtung nach dem Oberbegriff des Anspruches 1 anzugeben, bei der weniger aufwendige Trägerprofile für die Kabeltröge verwendet sind; die Trägerprofile sind so auszugestalten, daß sie trotz mechanischer gegenseitiger Festlegung in einzelne gegeneinander isolierte Abschnitte zu unterteilen sind, so daß etwaige Fremdspannungen sich jeweils nur auf einen einzigen Abschnitt auswirken können.

Die Erfindung löst diese Aufgabe durch die kennzeichnenden Merkmale des Anspruches 1. Danach werden zum Aufständern der Kabeltröge die im Straßenverkehr vielfach bewährten Leitplanken verwendet, die genügend solide sind, um die aufzunehmenden Lasten zu tragen. Die Leitplanken liegen auf Aufliegern auf, die ihrerseits an Pfosten oder Stützen angelenkt sind. Die Auflieger sind so ausgeführt, daß sie im Stoßbereich benachbarter Leitplanken zur mechanischen Festlegung dieser Leitplanken geeignet sind, wobei die Leitplanken dort gegenüber den Aufliegern elektrisch isoliert anzuordnen sind.

Vorteilhafte Ausgestaltungen und Weiterbildungen der erfindungsgemäßen Einrichtung sind in den Unteransprüchen angegeben.

So sollen nach der Lehre des Anspruches 2 die Leitplanken um einen Winkel von etwa 90° verschwenkt sein; dies ermöglicht eine großflächige Auflage der Kabeltröge auf den Trägerprofilen und gewährleistet eine gute Zugänglichkeit der Tröge.

Nach der Lehre des Anspruches 3 sollen die isolierenden Zwischenstücke zwischen den Leitplanken und den Aufliegern in mindestens jeweils einem dieser Körper verschiebbar gelagert sein, so daß eine Relativbewegung zum Abbau von z. B. Wärmespannungen möglich ist.

Die konkrete Ausgestaltung besonders vorteilhaft ausgebildeter Zwischenstücke ist im Anspruch 4 angegeben.

Anspruch 5 kennzeichnet eine besonders vorteilhafte Ausgestaltung der Auflieger im Stoßbereich benachbarter Leitplanken.

Die besondere konstruktive Ausgestaltung der Auflieger gemäß Anspruch 6 gestattet neben der Festlegung der Leitplanken an den Aufliegern eine zusätzliche Abstützung der Leitplanken im Bereich der Auflieger, die einem seitlichen Abkippen der Leitplanken entgegenwirkt.

Auf die Bügel der Auflieger aufgesteckte Leisten sorgen nach der Lehre des Anspruches 7 dafür, daß die seitlichen Stützen der Auflieger keinen elektrischen Kontakt zu den Leitplanken bekommen.

Als Befestigungsmittel zum Festlegen der Leitplanken auf den Aufliegern kommen nach der Lehre des Anspruches 8 insbesondere Schrauben, Bolzen oder Niete zur Anwendung. Nach der Lehre des Anspruches 9 kann die Festlegung der Leitplanken an den Aufliegern aber auch durch Formstücke geschehen, die beim Einziehen in die Zwischenstücke diese oder sich selbst bleibend oder vorübergehend verformen und dann so ausgestaltet sind, daß sie nicht ohne Krafteinwirkung wieder aus den Zwischenstücken entnehmbar sind.

Die Erfindung ist nachstehend anhand eines in der Zeichnung dargestellten Ausführungsbeispieles näher erläutert.

Die Zeichnung zeigt in
- Figur 1: in einer teilweisen Schnittdarstellung die Seitenansicht auf den Stoßbereich zweier benachbarter Leitplanken und einen diese Leitplanken mechanisch festlegenden Auflieger und in
- Figur 2: eine Schnittdarstellung durch diese Anordnung entlang der Linien AA.

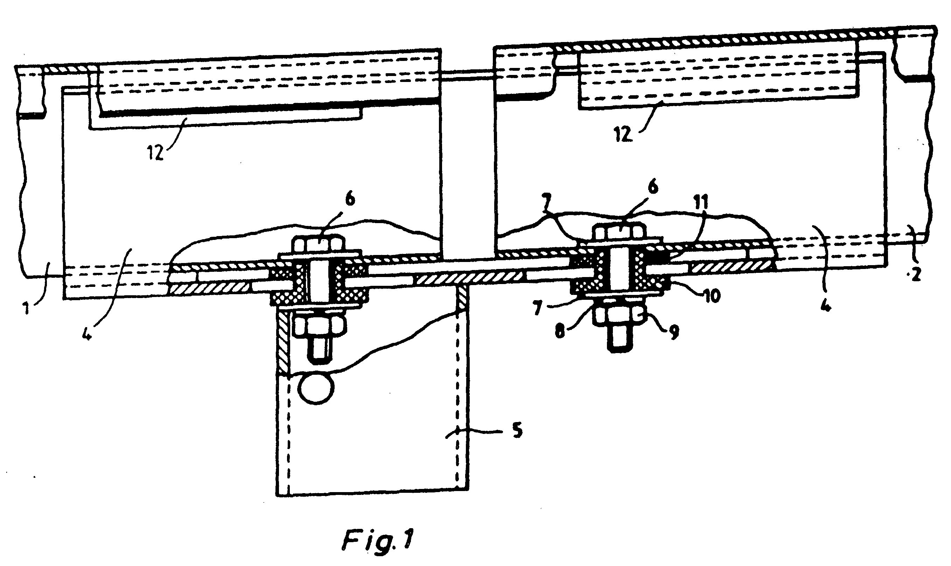

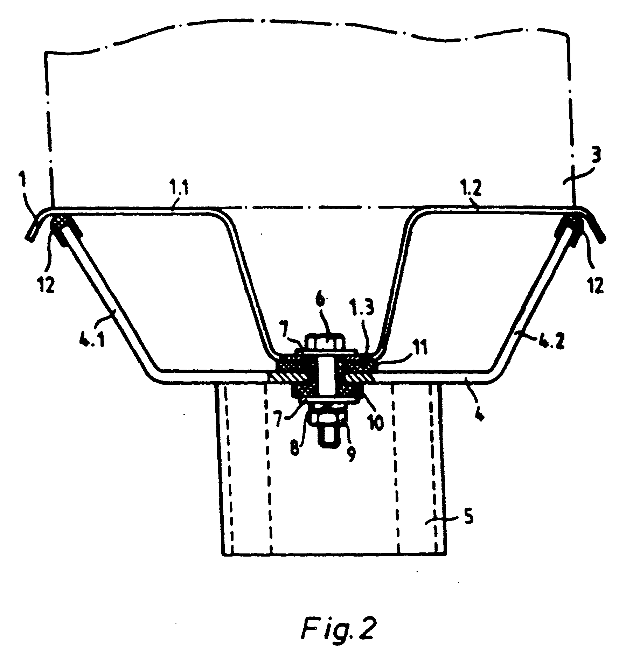

Figur 1 zeigt zwei Leitplanken 1 und 2, wie sie im Straßenverkehr z. B. zur Absicherung von Autobahnen gebräuchlich sind. Gegenüber der dort üblichen Anordnung sind diese Leitplanken erfindungsgemäß um ihre Längsachsen soweit verschwenkt, daß sie mit ihrer Breitseite in etwa waagerecht liegen, wie insbesondere aus Figur 2 gut erkennbar ist. Die Leitplanken dienen mit ihren Leitblechen 1.1 und 1.2 zur Aufnahme und Befestigung von in Figur 2 lediglich symbolisch angedeuteten Kunststoff-Kabeltrögen 3; über sie erfolgt die Aufständerung der Kabeltröge in den Bereichen, in denen diese nicht im Erdboden verlegt werden können oder sollen. Für die Aufständerung der Kabeltröge dienen in der Zeichnung nicht dargestellte Pfosten oder Stützen, die über geeignete Adapter 5 an den Aufliegern angreifen. Mindestens im Bereich der Stoßstellen benachbarter Leitplanken werden dabei die aus der Zeichnung ersichtlichen Auflieger 4 verwendet, die dort zur elektrisch isolierten mechanischen Festlegung benachbarter Leitplanken 1 und 2 dienen. Hierzu erstreckt sich der Auflieger jeweils über eine vorgegebene Mindestbreite über den Stoßstellenbereich der Leitplanken. Die Befestigung der Leitplanken 1 und 2 am Auflieger 4 geschieht z. B. durch Schrauben 6, die über Unterlegscheiben 7 und Federringe 8 mit zugehörigen Muttern 9 zusammenwirken. Für die galvanische Trennung benachbarter Leitplanken 1 und 2 sind diese gegenüber den gemeinsamen Aufliegern 4 elektrisch isoliert angeordnet. Dies geschieht durch speziell ausgebildete Zwischenstücke aus isolierendem Material zwischen den Leitplanken und den Aufliegern, die gleichzeitig auch der mechanischen Festlegung der Leitplanken dienen. Jedes solches Zwischenstück besteht aus einer Buchse 10 mit einem umlaufenden Kragen und aus mindestens einer Scheibe 11, die auf die Buchse aufgesteckt ist. Wenn, wie im dargestellten Ausführungsbeispiel angenommen, sich der Kragen der Buchse von der einen und die mindestens eine Scheibe von der anderen Seite her an den Auflieger anschmiegen, wobei die Buchse selbst eine elektrische Kontaktierung von Schraube und Auflieger verhindert, ist eine zuverlässige Isolation der Leitplanken gegenüber dem gemeinsamen Auflieger gegeben. Die Anordnung läßt sich natürlich auch in der Weise treffen, daß das aus Buchse und Scheibe bestehende Zwischenstück gegenüber der dagestellten Anordnung um 180° gedreht eingesetzt wird, wobei sich der Kragen und die Scheibe von beiden Seiten her an das Profil der Leitplanke anschmiegen. Desgleichen ist es möglich, durch Verwendung zusätzlicher Scheiben sowohl den Auflieger als auch die Leitplanken gegenüber den Befestigungsmitteln zu isolieren. Anstelle einer Buchse mit umlaufendem Kragen können auch rohrförmige Buchsen ohne Kragen verwendet sein, wobei die Funktion des Kragens durch mindestens je eine weitere Scheibe aus isolierendem Material wahrgenommen wird. Anstelle von zwei auf Buchsen aufsteckbare Scheiben kann auch eine isolierende Zwischenlage mit zwei im Abstand der Schrauben angeordneten Ausnehmungen verwendet sein.

Anstelle von Schrauben zum mechanischen Verbinden der Leitplanken mit den Aufliegern können hierzu auch Bolzen oder Niete verwendet sein. Auch ist es möglich, ganz ohne metallische Befestigungsmittel auszukommen und statt diesen einen Kunststoff-Formkörper in eine entsprechend ausgebildete Kunststoffbuchse einzuziehen. Beim Einziehen des Formkörpers werden entweder die Buchse oder der Formkörper oder beide bleibend oder vorübergehend verformt, wobei das Lösen dieser Verbindung nur unter Krafteinwirkung und ggf. Zerstörung des jeweiligen Zwischenstückes möglich ist.

Die elektrisch isolierte Anordnung benachbarter Leitplanken ist erforderlich, um zu gewährleisten, daß etwaige Fremdspannungseinfälle z. B. infolge abgerissener Fahrleitungen nur auf den durch die Störung direkt betroffenen Leitplankenabschnitt begrenzt sind. Hierzu sind die Leitplanken nicht nur gegenüber den gemeinsamen Aufliegern isoliert festzulegen, sondern sie dürfen auch keine sonstigen elektrisch leitenden Verbindung untereinander aufweisen. Zu diesem Zweck befindet sich zwischen den benachbarten Leitplanken ein gewisser Zwischenraum. Dieser Zwischenraum wird sich mindestens dann, wenn die Zwischenstücke eine Relativbewegung der Leitplanken gegenüber den Aufliegern zulassen, in Abhängigkeit von der Umgebungstemperatur verändern; er hat dann zusätzlich die Funktion einer Dehnungsfuge. Eine schwimmende Lagerung der Leitplanken gegenüber dem gemeinsamen Auflieger kann dadurch erreicht werden, daß die Leitplanken und/oder der Auflieger Schlitze oder Langlöcher zum Aufnehmen der Zwischenstücke aufweisen, über die eine Relativbewegung der Leitplanken und der Auflieger möglich ist. Die Befestigung der Leitplanken an den Aufliegern erfolgt im Jochbereich 1.3 der Leitplanken, so daß die Befestigungsmittel nicht in den Auflagebereich der Kabeltröge hineinragen.

Jeder Auflieger besteht aus einem U-förmigen Blechbügel begrenzter Breite, dessen Joch über einen Adapter 5 an einem Pfosten oder einer Stütze festgelegt werden kann. Dieses Joch ist in Längsrichtung der aufzunehmenden Leitplanken mit mindestens zwei beabstandeten Ausnehmungen zur Aufnahme jeweils eines Zwischenstückes versehen, wobei jedes Zwischenstück zur elektrischen Isolierung und gleichzeitig zur mechanischen Festlegung jeweils eines Leitplankenendes an dem Auflieger dient. Die Schenkel 4.1 und 4.2 des U-förmigen Bügels stehen schräg nach oben und nach außen ab und dienen dazu, die Leitplanken in ihrem Kantenbereich von der Unterseite her abzustützen. Auf die Schenkelenden der U-förmigen Bügel sind Leisten 12 aus einem isolierenden Material aufgesteckt, die verhindern, daß es zu einer elektrisch leitenden Berührung zwischen den Schenkeln eines gemeinsamen Aufliegers und den benachbarten Leitplanken kommt.

Jeder gegenüber benachbarten Leitplanken isolierte Leitplankenbereich kann auf geeignete Weise geerdet werden; dies kann durch Erdungskabel geschehen, die an eine Leitplanke eines jeden Leitplankenbereiches und an mindestens eine Fahrschiene angeschlossen sind. Jeder Leitplankenbereich kann dabei aus einer oder mehreren elektrisch leitend verbundenen Leitplanken bestehen; die Leitplanken jedes Leitplankenbereiches sind dann ohne isolierende Zwischenstücke an den sie verbindenden Aufliegern zu befestigen oder durch Kurzschlußverbinder zu kontaktieren.

## Patentansprüche

1. Einrichtung zum Aufständern von Kunststoff-Kabeltrögen (3) im Nahbereich elektrifizierter Bahnstrecken, bestehend aus metallischen, über metallische Auflieger (4) auf Pfosten (5) oder Stützen befestigbaren Trägerprofilen für die Kabeltröge (3), wobei die Trägerprofile in vorgegebenen Abständen über Zwischenstücke gegeneinander isoliert sind,
**dadurch gekennzeichnet**,
daß die Trägerprofile durch um ihre Längsachsen verschwenkbare Leitplanken (1, 2) für den Straßenverkehr gebildet sind, deren Joche (1.3) mittelbar über Befestigungsmittel (6 bis 9) mit Aufliegern (4) verbunden sind, wobei im Stoßstellenbereich die Leitplankenendbereiche benachbarter Leitplanken (1, 2) jeweils an einem gemeinsamen Auflieger (4) befestigt sind und die Joche (1.3) der Leitplanken (1, 2) hierzu Ausnehmungen zum Aufnehmen von Zwischenstücken (10, 11) aus isolierendem Material aufweisen, welche die Befestigungsmittel aufnehmen und die Auflieger (4) gegenüber den Leitplanken (1, 2) elektrisch isolieren.

2. Einrichtung nach Anspruch 1,
**dadurch gekennzeichnet,**
daß die Leitplanken (1, 2) um einen Winkel von etwa 90° verschwenkt sind.

3. Einrichtung nach Anspruch 1 oder 2,
**dadurch gekennzeichnet,**
daß die Joche (1.3) der Leitplanken (1, 2) und/oder die Auflieger (4) Schlitze oder Langlöcher zur Aufnahme der Zwischenstücke (10, 11) aufweisen, wobei die Schlitze oder Langlöcher eine Relativbewegung der Leitplanken (1, 2) gegenüber den Aufliegern (4) in Längsrichtung der Leitplanken (1, 2) gestatten.

4. Einrichtung nach einem der Ansprüche 1 bis 3,
**dadurch gekennzeichnet**,
daß die Zwischenstücke aus Buchsen (10) mit flanschartig umlaufenden Kragen und auf die Buchsen aufsteckbaren Scheiben/planen Zwischenlagen (11) bestehen, wobei sich die Kragen von der einen und die Scheiben/planen Zwischenlagen von der anderen Seite her an die Auflieger (4) und/oder die Leitplanken (1, 2) anlegen

5. Einrichtung nach einem der Ansprüche 1 bis 4,
**dadurch gekennzeichnet,**
daß jeder Auflieger (4) aus einem U-förmigen Bügel begrenzter Breite besteht, dessen Joch bedarfsweise an einem Pfosten oder einer Stütze festlegbar ist und in Längsrichtung der aufzunehmenden Leitplanken mit mindestens zwei beabstandeten Ausnehmungen zur Aufnahme je eines Zwischenstückes (10, 11) versehen ist.

6. Einrichtung nach Anspruch 5,
**dadurch gekennzeichnet**,
daß die U-förmigen Bügel (4) schräg in Richtung Leitbleche (1.1, 1.2) der Leitplanken (1, 2) und nach außen vorstehende Schenkel (4.1, 4.2) aufweisen, welche von der Unterseite her die Kantenbereiche der Leitplanken (1, 2) abstützen.

7. Einrichtung nach Anspruch 6,
**dadurch gekennzeichnet,**
daß auf die Schenkel (4.1, 4.2) der U-förmigen Bügel (4) Leisten (12) aus isolierendem Material aufgesteckt sind.

8. Einrichtung nach Anspruch 1 bis 7,
**dadurch gekennzeichnet**,
daß die Befestigungsmittel durch Schrauben (6, 9) Bolzen oder Niete gebildet sind.

9. Einrichtung nach Anspruch 1 bis 7,
**dadurch gekennzeichnet,**
daß die Befestigungsmittel als beim Einziehen in die Zwischenstücke dauerhaft oder vorübergehend verformbare Formteile und/oder als die Zwischenstücke verformende Formteile ausgebildet sind, die nach dem Einziehen kraft- und/oder formschlüssig in den Zwischenstücken gehalten sind.

## Claims

1. Device for supporting plastic cable troughs (3) in the vicinity of electrified railway tracks, consisting of metallic bearer profiles for the cable troughs (3) fastenable via metallic supports (4) on posts (5) or stanchions, the bearer profiles being insulated from one another at set distances via spacers, cheracterized in that the bearer profiles are formed by crash barriers (1, 2) for road traffic which are swivellable about their longitudinal axes, the yokes (1.3) of which barriers are indirectly connected via fastening means (6 to 9) to supports (4), the crash barrier end areas of adjacent crash barriers (1, 2) being fastened in the joint location area respectively to a common support (4) and the yokes (1.3) of the crash barriers (1, 2) having for this purpose recesses to receive spacers (10, 11) of insulating material, which spacers hold the fastening means and insulate the supports (4) electrically in relation to the crash barriers (1, 2).

2. Device according to claim 1, characterized in that the crash barriers (1, 2) are swivelled about an angle of roughly 90°.

3. Device according to claim 1 or 2, characterized in that the yokes (1.3) of the crash barriers (1, 2) and/or the supports (4) have slots or elongated holes to take up the spacers (10, 11), the slots or elongated holes permitting a relative movement of the crash barriers (1, 2) in relation to the supports (4) in the longitudinal direction of the crash barriers (1, 2).

4. Device according to one of claims 1 to 3, characterized in that the spacers consist of bushings (10) with collars surrounding them in a flange-like manner and washers/flat shims (11) placeable on the bushings, the collars on one side and the washers/flat shims on the other side resting against the supports (4) and/or the crash barriers (1, 2).

5. Device according to one of claims 1 to 4, characterized in that each support (4) consists of a U-shaped bow of limited width, the yoke of which can be fixed if necessary to a post or a stanchion and is provided in the longitudinal direction of the crash barriers to be held with at least two recesses at a distance to hold a spacer (10, 11) each.

6. Device according to claim 5, characterized in chat the U-shaped bows (4) have shanks (4.1, 4.2) protruding obliquely in the direction of the deflectors (1.1, 1.2) of the crash barriers and outwardly, which shanks support the edge areas of the crash barriers (1, 2) from the underside.

7. Device according to claim 6, characterized in that cover strips (12) of insulating material are placed on the shanks (4.1, 4.2) of the U-shaped bow (4).

8. Device according co claims 1 to 7, characterized in that the fastening means are formed by screws (6, 9), bolts or rivets.

9. Device according to claim 1 to 7, characterized in that the fastening means are formed as moulded pieces which are permanently or temporarily deformable on insertion into the spacers and/or as moulded pieces deforming the spacers, which pieces following insertion are held in the spacers in a non-positively and/or positively locking manner.

## Revendications

1. Dispositif pour supporter des caniveaux (1) de câbles en matière plastique à proximité de lignes de chemin de fer électrifiées, constitués de profilés supports métalliques pour les caniveaux (3) de câbles, profilés qui peuvent être fixés par l'intermédiaire de supports (4) métalliques sur des pieux (5) ou des appuis, les profilés supports étant mutuellement isolés à des distances prescrites par des pièces intermédiaires,
caractérisé
en ce que les profilés supports sont formés par des rails (1, 2) de sécurité pour le trafic routier, qui peuvent basculer par rapport à leur axe longitudinal et dont les âmes (1.3) sont reliées directement par des moyens (6 à 9) de fixation à des supports (4), les régions d'extrémité de glissières (1, 2) de sécurité voisines étant dans la région des points de joint fixées respectivement à un support (4) commun, et les âmes (1.3) des glissières (1, 2) de sécurité comportant à cet effet des évidements de réception de pièces intermédiaires (10, 11) en matériau isolant, qui reçoivent les moyens de fixation et qui isolent électriquement les supports (4) des glissières (1, 2) de sécurité.

2. Dispositif suivant la revendication 1,
caractérisé
en ce que les glissières (1, 2) de sécurité sont basculées d'un angle de 90° environ.

3. Dispositif suivant la revendication 1 ou 2,
caractérisé
en ce que les âmes (1.3) des glissières (1, 2) de sécurité et/ou les supports (4) comportent des fentes ou des boutonnières de réception des pièces intermédiaires (10, 11), les fentes ou les boutonnières autorisant un mouvement relatif des glissières (1, 2) de sécurité par rapport aux supports (4), dans la direction longitudinale des glissières (1, 2) de sécurité.

4. Dispositif suivant l'une des revendications 1 à 3,
caractérisé
en ce que les pièces intermédiaires sont constituées de douilles (10) à collet faisant tout le tour à la manière d'une collerette, et de rondelles/couches intermédiaires (11) planes pouvant être enfilées sur les douilles, les collets étant appliqués d'un côté et les rondelles/couches intermédiaires planes de l'autre côté aux supports (4) et/ou aux glissières (1, 2) de sécurité.

5. Dispositif suivant l'une des revendications 1 à 4,
caractérisé
en ce que chaque support (4) est constitué d'un étrier en forme de U de largeur limitée dont l'âme en cas de besoin peut être fixée à un pieu ou à un appui, et est munie dans la direction longitudinale des rails de sécurité à prendre, d'au moins deux évidements à distance l'un de l'autre, de réception respectivement d'une pièce intermédiaire (10, 11).

6. Dispositif suivant la revendication 5,
caractérisé
en ce que l'étrier (4) en forme de U comporte des branches (4.1, 4.2) inclinées en direction de chicanes (1.1, 1.2) des glissières de sécurité, et qui soutienne par le côté inférieur les régions de bord des glissières (1, 2) de sécurité.

7. Dispositif suivant la revendication 6,
caractérisé
en ce que sur les branches (4.1, 4.2) de l'étrier (4) en forme de U, sont enfilées des réglettes (12) en matériau isolant.

8. Dispositif suivant la revendication 1 à 7,
caractérisé
en ce que les moyens de fixation sont formés par des vis (6, 9) des boulons ou des rivets.

9. Dispositif suivant la revendication 1 à 7,
caractérisé
en ce que des moyens de fixation sont formés en tant que pièces de forme, déformables de manière permanente ou transitoire, lorsqu'elles sont tirées dans les pièces intermédiaires et/ou en pièces de forme déformant les pièces intermédiaires, qui sont maintenues dans les pièces intermédiaires après l'introduction par coopération de force et/ou par complémentarité de forme.
